# EUROPÄISCHE PATENTSCHRIFT

(11) **EP 2 897 712 B1**
(45) Veröffentlichungstag und Bekanntmachung des Hinweises auf die Patenterteilung: **13.03.2019**
(21) Anmeldenummer: 13766274.8
(22) Anmeldetag: 20.09.2013
(51) Int. Cl.: B01D 53/86

(54) **VERFAHREN ZUR REINIGUNG VON ABGAS UND ZUR REGENERIERUNG EINES OXIDATIONSKATALYSATORS**
METHOD FOR PURIFYING EXHAUST GAS AND FOR REGENERATING AN OXIDATION CATALYTIC CONVERTER
PROCÉDÉ D'ÉPURATION DE GAZ D'ÉCHAPPEMENT ET DE RÉGÉNÉRATION D'UN CATALYSEUR D'OXYDATION

(30) Priorität: 21.09.2012 DE 102012018629
(43) Veröffentlichungstag der Anmeldung: 29.07.2015
(73) Patentinhaber: Clariant International Ltd, 4132 Muttenz (CH)
(72) Erfinder: SCHUSCHKE, Margit, 83052 Bruckmühl (DE); KLOSE, Frank, 83026 Rosenheim (DE); STEIN, Andane, 83052 Bruckmühl (DE); TISSLER, Arno, 93105 Tegernheim (DE); BÜTTNER, Olaf, 83059 Kolbermoor (DE); REZNIKOV, Grigory, 83052 Bruckmühl (DE)
(74) Vertreter: Kuba, Stefan
(86) Internationale Anmeldenummer: PCT/EP2013/069579
(87) Internationale Veröffentlichungsnummer: WO 2014/044798

(56) Entgegenhaltungen:
- EP-A1- 1 479 883
- AT-A4- 508 921
- DE-A1- 10 130 872
- DE-A1-102004 006 861
- US-A- 5 643 545
- US-A1- 2011 250 127
- US-A1- 2011 311 423

## Beschreibung

Die vorliegende Erfindung betrifft ein Verfahren zur Reinigung von Abgas und zur Regenerierung eines Oxidationskatalysators.

Seit Beginn der Abgasreinigung werden große Anstrengungen unternommen, den Schadstoffausstoß bei Verbrennungsprozessen immer weiter herabzusetzen. Für die Abgasnachbehandlung sind zum Beispiel unter anderem folgende Systeme teilweise bereits realisiert bzw. befinden sich in der Erprobung:
- selektive katalytische Reduktion (SCR-Verfahren)
- NOₓ-Reduktionskatalysator (NSR)
- Oxidationskatalysatoren
- katalytisch beschichteter Partikelfilter
- Kombinationen wie z. B. "Continuously Regenerating Trap" (CRT-System), SCRT-Verfahren (Selective Catalytic Reduction Technology), DPNR-Verfahren (Diesel Particulate NOx Reduction).

Ein SCR-Katalysator ist beispielsweise ein Katalysator, der die selektive katalytische Reduktion von Stickoxiden aus Abgasen von Verbrennungsmotoren und auch von Kraftwerken ermöglicht. Mit einem derartigen SCR-Katalysator werden die Stickoxide NO und NO₂ (allgemein als NOₓ bezeichnet) selektiv reduziert, wobei für die Reaktion gewöhnlich NH₃ (Ammoniak) zugemischt wird. Als Reaktionsprodukt entstehen daher primär die unbedenklichen Stoffe Wasser und Stickstoff. Wird mehr Reduktionsmittel dosiert, als bei der Reduktion mit NOx umgesetzt wird, so kann es zu einem unerwünschten NH₃-Schlupf kommen. Die Entfernung des NH₃ kann durch einen zusätzlichen Oxidationskatalysator hinter dem SCR-Katalysator erzielt werden. Dieser Sperrkatalysator oxidiert das ggf. auftretende Ammoniak.

Derzeit werden zur Stickoxidminderung sowohl im Kraftwerksbereich als auch im Automobilbereich überwiegend Katalysatoren auf Basis von Wolframoxid, Vanadiumpentoxid und Titandioxid (VWT-Katalysatoren) eingesetzt. Neben den bisher verwendeten VWT-Katalysatoren haben sich Zeolithe, die beispielsweise mit Fe oder Cu metallausgetauscht sind, als vielversprechende Katalysatoren in der SCR-Katalyse herausgestellt.

Die Beseitigung der Kohlenwasserstoff- und CO-Emissionen aus dem Abgas kann durch einen Oxidationskatalysator erfolgen. Zum Beispiel bestehen Dieseloxidationskatalysatoren (DOC) im Wesentlichen aus einer Trägerstruktur aus Keramik, einer Oxidmischung (Washcoat) sowie aus den katalytisch aktiven Edelmetallkomponenten wie Platin, Palladium und Rhodium. Der DOC erfüllt dabei die Funktion, dass CO und Kohlenwasserstoffe am Katalysator zu CO₂ und H₂O oxidiert werden.

Als Oxidationskatalysatoren können auch metallausgetauschte Zeolithe eingesetzt werden. Diese Zeolithe enthalten beispielsweise durch Metallaustausch eingelagerte Edelmetalle, z.B. Pt oder Pd.

Unter dem Begriff "Zeolith" wird allgemein gemäß der Definition der International Mineralogical Association (D.S. Coombs et al., Can. Mineralogist, 35, 1997, 1571) eine kristalline Substanz aus der Gruppe der Aluminiumsilikate mit Raumnetzstruktur der allgemeinen Formel

Mⁿ⁺[(AlO₂)ₓ(SiO₂)_{y}]·z(H₂0)

verstanden, die aus SiO₄/AlO₄-Tetraedern bestehen, die durch gemeinsame Sauerstoffatome zu einem regelmäßigen dreidimensionalen Netzwerk verknüpft sind. Das Zeolithgerüst enthält offene Hohlräume in Form von Kanälen und Käfigen, die normalerweise von Wassermolekülen und extra Gerüstkationen, die ausgetauscht werden können, besetzt sind. Auf ein Aluminiumatom kommt eine überschüssige negative Ladung, die durch diese Kationen kompensiert wird. Die Zeolithe unterscheidet man hauptsächlich nach der Geometrie der Hohlräume, die durch das starre Netzwerk der SiO₄/AlO₄-Tetraeder gebildet werden. Die Eingänge zu den Hohlräumen werden von "Ringen" aus 8, 10 oder 12 Atomen gebildet (eng-, mittel- und weitporige Zeolithe). Bestimmte Zeolithe zeigen einen gleichförmigen Strukturaufbau (z. B. ZSM-5 mit MFI-Topologie) mit linearen oder zickzackförmig verlaufenden Kanälen, bei anderen schließen sich hinter den Porenöffnungen größere Hohlräume an, z.B. bei den Y- und A-Zeolithen, mit den Topologien FAU und LTA.

Zementwerke und andere hochkalorische industrielle Prozesse emittieren Kohlenmonoxid (bis in den g/Nm³-Bereich), Stickoxide und organische Schadstoffe, die bei Verbrennungsprozessen, die zur Generierung der notwendigen hohen Temperaturen benötigt werden, freigesetzt werden. Bislang werden in solchen Anlagen zur Stickoxidminderung neben thermischen Verfahren (selektive nicht-katalytische Reduktion; NSCR) Vanadium-Wolfram-Titan (VWT)-Katalysatoren zur selektiven katalytischen Reduktion (SCR) mit Ammoniak eingesetzt. Diese werden bei etwa 220 bis 280 °C betrieben und haben typischerweise eine Lebensdauer im Bereich von Monaten. Ein Problem dieser Katalysatoren ist jedoch der relativ hohe Ammoniakschlupf, der nur durch unterstöchiometrische Dosierung auf Kosten der Effizienz der Stickoxidminderung begrenzt werden kann.

Oft werden bei solchen hochkalorischen Prozessen aus wirtschaftlichen Gründen so genannte Ersatzbrennstoffe eingesetzt. Dabei handelt es sich beispielsweise um Altreifen, Altlösungsmittel und andere brennbare Abfallstoffe. Die Verwendung dieser Ersatzbrennstoffe führt dazu, dass sich im Verbrennungsprozess feinste Rußpartikel bilden können. Diese Rußpartikel können zur schnellen Deaktivierung von Oxidationskatalysatoren zum Abbau von Kohlenmonoxid und organischen Schadstoffen führen, wenn diese unter den Bedingungen der SCR mit VWT-Katalysatoren betrieben werden, so dass hier bestenfalls Standzeiten im Bereich von Stunden erreicht werden. Beispielsweise können frische Oxidationskatalysatoren, die als katalytisch aktive Komponenten Edelmetalle enthalten, bei der Abgasbehandlung in Zementwerken nach 2 bis 6 Stunden vollständig deaktiviert werden.

US 5 643 545 A beschreibt einen Pt-haltigen Zeolith-Katalysator zur Behandlung von chlorhaltigen Abgasen.

AT 508 921 A4 zeigt ein Verfahren zur Behandlung von Rauchgasen aus einer Verbrennung mit Zeolith-Katalysatoren, die allerdings kein Pt oder Pd enthalten.

US 2011/250127 A1 beschreibt ein Verfahren zur Behandlung von Verbrennungsgase, wobei das Verhältnis von NO und NO2 über einen Oxidationskatalysator enthaltend Pd oder Pt auf einem Zeolith bei einer Temperatur von 250-450 °C eingestellt wird, bevor es einer NOx Reduktionseinheit zugeführt wird.

Die Aufgabe der Erfindung ist es, ein Verfahren zur Reinigung von Abgas anzugeben, bei dem die Deaktivierung des dabei verwendeten Oxidationskatalysators vermieden oder reduziert wird. Diese Aufgabe wird gelöst durch ein Verfahren zur Reinigung von Abgas, das durch die Verbrennung von Holz, Biomasse, Erdöl, Altöl, Altreifen, Altlösungsmittel, industriellen oder kommunalen Abfallstoffen, Müll und/oder Sondermüll, und/oder bei der Herstellung von Zement oder in einer Sintermetallanlage entsteht und zur Regenerierung eines hierfür eingesetzten Oxidationskatalysators, umfassend
Behandeln des Abgases in dem Oxidationskatalysator, der ein katalytisch aktives Material umfasst, das ein mikroporöses Zeolithmaterial enthält, welches Pt und/oder Pd und optional ein unedles Übergangsmetall enthält,
wobei der Oxidationskatalysator kontinuierlich oder zeitweise bei einer Temperatur, die die Oxidation von Ruß- und/oder Kohlenstoff-Partikeln bewirkt, betrieben wird, und wobei der Oxidationskatalysator für den Abbau von CO und Kohlenwasserstoffen eingesetzt wird.

Überraschenderweise wurde gefunden, dass der Deaktivierung von Oxidationskatalysatoren zum Abbau von Kohlenmonoxid und organischen Schadstoffen dadurch begegnet werden kann, dass man diese Katalysatoren entweder ständig bei einer Temperatur, die die Oxidation von Ruß- und/oder Kohlenstoff-Partikeln bewirkt, betreibt oder zeitweise bei einer derartigen Temperatur regeneriert. Die Temperatur, die die Oxidation von Ruß- und/oder Kohlenstoff-Partikeln bewirkt, kann insbesondere oberhalb von 280 °C, bevorzugt oberhalb 300 °C oder 320 °C, besonders bevorzugt oberhalb von 350 °C oder 400 °C liegen.

Weitere Merkmale und Zweckmäßigkeiten ergeben sich aus der folgenden Beschreibung von Ausführungsformen, den Figuren und den Unteransprüchen.

Alle hier beschriebenen und sich nicht gegenseitig ausschließenden Merkmale von Ausführungsformen können miteinander kombiniert werden. Elemente einer Ausführungsform können in den anderen Ausführungsformen genutzt werden ohne weitere Erwähnung. Ausführungsformen der Erfindung werden nun durch die nachfolgenden Beispiele anhand von Figuren genauer beschrieben, ohne sie dadurch einschränken zu wollen. Es zeigen:
- Fig. 1a: den Umsatz von Ethylen in Abhängigkeit von der Temperatur der Beispiele 1 bis 3;
- Fig. 1b: den Umsatz von CO in Abhängigkeit von der Temperatur der Beispiele 1 bis 3;
- Fig. 2: die Thermodesorption von CO₂ (m/z = 44) für das Beispiel 2 in Abhängigkeit von der Temperatur; und
- Fig. 3: die Thermodesorption von CO₂ (m/z = 44) für das Beispiel 2 in Abhängigkeit von der Zeit.

In der nachfolgenden Beschreibung von Ausführungsformen werden die Ausführungsformen der Erfindung im Folgenden anhand eines Pt und/oder Pd enthaltenden Oxidationskatalysators beschrieben, ohne die Erfindung darauf zu begrenzen.

Der Begriff "umfassend" beinhaltet in Ausführungsformen "im Wesentlichen bestehend aus" oder "bestehend aus" und kann durch diese ersetzt werden. Für grammatikalische Abwandlungen des Wortes "umfassend" gilt dies entsprechend. Ferner gilt hier für die Beschreibung von Wertebereichen, dass die Angabe eines breiten Bereichs mit engeren alternativen oder bevorzugten Bereichen auch Bereiche offenbart, die durch eine beliebige Kombination angegebener unterer Bereichsgrenzen mit angegebenen oberen Bereichsgrenzen gebildet werden können.

Das erfindungsgemäße Verfahren dient zur Reinigung von Abgas und zur gleichzeitigen Regenerierung eines Oxidationskatalysators, der für die Reinigung des Abgases eingesetzt wird. Dabei wird auf oder in dem Oxidationskatalysator vorhandener Ruß, der während der Katalyse aus beispielsweise organischen Schadstoffen, wie Olefinen und Aromaten entsteht, oxidiert und so unschädlich gemacht und/oder aus dem Oxidationskatalysator entfernt. Der Ruß kann insbesondere Rußpartikel oder Kohlenstoffpartikel enthalten.

In Ausführungsformen des Verfahrens wird das Abgas in einem Oxidationskatalysator, der ein katalytisch aktives Material umfasst, das mindestens ein Edelmetall, welches Pt und/oder Pd ist, und/oder mindestens ein unedles Übergangsmetall enthält, behandelt, wobei der Oxidationskatalysator kontinuierlich oder zeitweise bei einer Temperatur von mehr als 280°C, bevorzugt mehr als 300°C, bevorzugter mehr als 350°C, betrieben wird.

In einer Ausführungsform umfasst das Verfahren Behandeln des Abgases in einem Oxidationskatalysator, der ein katalytisch aktives Material umfasst, das mindestens ein Edelmetall, welches Pt und/oder Pd ist, und/oder mindestens ein unedles Übergangsmetall enthält, wobei der Oxidationskatalysator kontinuierlich oder zeitweise bei einer Temperatur von mehr als 280°C, bevorzugt mehr als 300°C, bevorzugter mehr als 350°C, betrieben wird. Als das Betreiben des Oxidationskatalysators oder als der Betrieb des Oxidationskatalysators kann die katalytische Reinigung, insbesondere die Oxidation, des Abgases oder von Komponenten des Abgases verstanden werden.

Das im Verfahren von Ausführungsformen zu reinigende Abgas wird durch einen hochkalorische Verbrennung erzeugt. Zum Beispiel kann Holz, Biomasse, oder Erdöl verbrannt werden, wobei Verbrennungsprozesse ablaufen, die zu einer ausgesprochen hohen Wärmeentwicklung führen. Ferner kann das Abgas durch Verbrennung von Ersatzbrennstoffen, wie Altöl oder Altreifen, erzeugt werden. Außerdem kann das Abgas bei der Herstellung vom Zement oder in Sintermetallanlagen entstehen. Im Verfahren von Ausführungsformen kann das Abgas bei der Verbrennung von Holz, Biomasse, Erdöl, Altöl, Altreifen, Altlösungsmittel, industrieller oder kommunaler Abfallstoffe, Müll und/oder Sondermüll, und/oder bei der Herstellung von Zement oder in einer Sintermetallanlage erzeugt werden. Mit anderen Worten, der in Ausführungsformen eingesetzte Oxidationskatalysator, der ein katalytisch aktives Material umfasst, das mindestens ein Edelmetall, welches Pt und/oder Pd ist, und/oder mindestens ein unedles Übergangsmetall enthält, wird zur Reinigung von Abgas verwendet, das durch Verbrennung von Holz, Biomasse, Erdöl, Altöl, Altreifen, Altlösungsmittel, industrieller oder kommunaler Abfallstoffe, Müll und/oder Sondermüll, und/oder bei der Herstellung von Zement oder in einer Sintermetallanlage erzeugt wird.

Im Verfahren von Ausführungsformen kann der zeitweise Betrieb des Oxidationskatalysators bei der Temperatur, die die Oxidation von Ruß- und/oder Kohlenstoff-Partikeln bewirkt, in Zeitabständen von 0,5 bis 10 Stunden, bevorzugt 1 bis 6 Stunden, durchgeführt werden.
Außerdem kann beim zeitweisen Betrieb des Oxidationskatalysators die Temperatur, die die Oxidation von Ruß- und/oder Kohlenstoff-Partikeln bewirkt, für eine Zeitdauer im Bereich von bevorzugt 0,1 bis 3 und besonders bevorzugt von 0,25 bis 2 Stunden eingestellt werden.

In Ausführungsformen des Verfahrens kann ferner beim kontinuierlichen oder zeitweisen Betrieb des Oxidationskatalysators die Temperatur, die die Oxidation von Ruß- und/oder Kohlenstoff-Partikeln bewirkt, mittels des Abgases und/oder mittels einer Heizeinrichtung und/oder eines Wärmetauschers eingestellt werden.

Das Verfahren von Ausführungsformen hat den Vorteil, dass die Regeneration des Oxidationskatalysators am Ort seiner Verwendung, insbesondere ohne die Notwendigkeit eines Ausbaus des Oxidationskatalysators aus der Abgasreinigungsanlage, erfolgen kann.

Gemäß Ausführungsformen des Verfahrens wird der kontinuierliche oder zeitweise Betrieb des Oxidationskatalysators bei einer Temperatur von mehr als 280°C, bevorzugt mehr als 300°C, bevorzugter mehr als 350°C, unter Anwesenheit von Sauerstoff und/oder Luft durchgeführt. Hierzu kann dem Abgas Sauerstoff zugeführt werden. Jedoch kann auch das Realabgas, d.h. das pure Verbrennungsgas, als Sauerstoffquelle genutzt werden, sofern darin genügend Sauerstoff enthalten ist.

Die Regeneration kann beispielsweise erfolgen, indem das Einströmen des Abgases in den Oxidationskatalysator unterbrochen wird und Sauerstoff oder ein Gemisch von Sauerstoff und anderen Gasen, z.B. Inertgasen, zugeführt wird. Alternativ kann der Abgasstrom unterbrochen werden und der Oxidationskatalysator kann unter Anwesenheit des restlichen Abgases, das sich noch im Oxidationskatalysator befindet und Sauerstoff enthält, regeneriert werden. Sofern das Realabgas hinreichende Mengen an Sauerstoff enthält, ist auch eine Regeneration des Oxidationskatalysators unter Realabgas ohne Unterbrechung der Gaszufuhr - das heißt, allein durch Temperaturerhöhung - möglich.

Bevorzugt kann das zugeführte Gas beim kontinuierlichen oder zeitweisen Betrieb des Oxidationskatalysators mindestens 0,1 Vol.-%, mehr bevorzugt mindestens 2 Vol.-% und noch mehr bevorzugt mindestens 5 Vol.-% Sauerstoff enthalten. Wird ein Regenerationsschritt durchgeführt, kann es zur Vermeidung einer starken Temperaturentwicklung auch von Vorteil sein, den Sauerstoffgehalt zunächst auf geringe Werte (< 1 Vol.-%) zu begrenzen und dann im Laufe des Regenerationsschrittes zu erhöhen.

Im Verfahren nach einer der Ausführungsformen kann die Temperatur in einem Bereich über 320°C, bevorzugt zwischen 350 und 550°C, liegen, um die Regeneration zu bewirken. Die optimale Regenerationstemperatur kann beispielsweise in Abhängigkeit von dem Verbrennungsprozess und den dabei entstehenden Abgasen gewählt werden.

Bei dem Oxidationskatalysator handelt es sich um einen Oxidationskatalysator, der für den Abbau von CO und Kohlenwasserstoffen eingesetzt wird. Zu diesem Zweck wird im Oxidationskatalysator als das Edelmetall Pt und/oder Pd eingesetzt. Zusätzlich kann der Oxidationskatalysator mindestens ein unedles Übergangsmetall, bevorzugt aus der Gruppe Co, Mn, Cu, Cr und Fe, enthalten. Das Übergangsmetall kann im Oxidationskatalysator als Oxid und/oder Mischoxid vorliegen und/oder reduzierbar sein. Außerdem kann im Oxidationskatalysator das katalytisch aktive Material als Vollextrudat oder als Washcoat auf einem Trägerkörper eingesetzt werden.

In dem Verfahren von Ausführungsformen kann das katalytisch aktive Material ein mikroporöses Zeolithmaterial, das mindestens Pt und/oder Pd und mindestens ein unedles Übergangsmetall, bevorzugt aus der Gruppe Co, Mn, Cu, Cr und Fe enthält, umfassen. Das Übergangsmetall kann als Oxid und/oder Mischoxid vorliegen und/oder reduzierbar sein. Ferner kann das katalytisch aktive Material einen porösen Binder und/oder mindestens ein Oxid des Si, Ti und/oder W enthalten. Außerdem kann das katalytisch aktive Material Aluminiumoxid, das mit Ce, La und/oder Y dotiert ist, aufweisen. Ferner kann das katalytisch aktive Material mindestens ein Oxid und/oder Mischoxid der Elemente aus den Gruppen IIIa, IVa, IIIb, und/oder IVb des Periodensystems der Elemente, bevorzugt ein Oxid und/oder Mischoxid von Al, Si, Ti, und/oder Zr, ferner bevorzugt mindestens ein Additiv, wie eine Verbindung der Alkali- und/oder Erdalkalimetalle, enthalten.

In Ausführungsformen weist das katalytisch aktive Material eine mittels BET-Methode gemäß DIN ISO 9277:2003-05 messbare spezifische Oberfläche von mindestens 0,1 m²/g, bevorzugt mindestens 10 m²/g und noch mehr bevorzugt mindestens 20 m²/g auf.

In einer weiteren Ausführungsform des Verfahrens kann der Oxidationskatalysator in Kombination mit einem oder mehreren Katalysatoren betrieben werden. Dieser zusätzliche Katalysator kann ausgewählt sein aus einem Katalysator für die Entfernung von Stickoxiden, einem Katalysator für die selektive katalytische Reduktion, einem Katalysator umfassend Vanadium, Wolfram und/oder Titan und einem Katalysator umfassend einen Edel- oder Übergangsmetalle, wie Cu und/oder Fe, enthaltenden Zeolithen. Das Verfahren dieser Ausführungsform kann bei Verwendung eines zusätzlichen Katalysators zur Stickoxidminderung sowohl zur Minderung von CO und organischen Schadstoffen, als auch zur Minderung von Stickoxiden dienen.

Wird der Oxidationskatalysator in Kombination mit einem oder mehreren zusätzlichen Katalysatoren betrieben, kann das Verfahren folgende Schritte umfassen: Behandeln des Abgases in dem Oxidationskatalysator; Einleiten von Reduktionsmittel in das Abgas; und Behandeln des Abgases in dem Katalysator für die selektive katalytische Reduktion; wobei das Einleiten des Reduktionsmittels vor dem Behandeln des Abgases in dem Katalysator für die selektive katalytische Reduktion durchgeführt wird. Das Behandeln des Abgases in dem Oxidationskatalysator kann vor dem Einleiten des Reduktionsmittels in das Abgas oder nach dem Behandeln des Abgases in dem Katalysator für die selektive katalytische Reduktion durchgeführt werden. Es kann zunächst das Reduktionsmittel zugeführt werden, dann das Abgas im Katalysator für die selektive katalytische Reduktion und anschließend im Oxidationskatalysator behandelt werden. Ferner kann als das Reduktionsmittel Ammoniak und/oder Harnstoff, Letzterer auch als wässrige Lösung, eingesetzt werden.

In dem Verfahren von Ausführungsformen, bei denen der Oxidationskatalysator in Kombination mit einem oder mehreren Katalysatoren betrieben wird, kann das Abgas bei einer Temperatur oberhalb 300 °C und/oder unterhalb 600°C, bevorzugt oberhalb von 350 °C und unterhalb 550 °C, bezogen jeweils auf die Temperatur im Oxidationskatalysator oder Katalysatorbett, gereinigt werden.

Beispiele von Katalysatoren zur Stickoxidminderung, die im erfindungsgemäßen Verfahren in Kombination mit einem Oxidationskatalysator eingesetzt werden können, sind zeolithische Katalysatoren, die als katalytisch aktive Komponente ein Übergangsmetall enthalten. Beispielhafte Verfahren zur Herstellung solcher Katalysatoren sind in der EP 0955080 A1 und in der DE 10 2006 033452 A1 beschrieben. Erwähnt seien hierbei insbesondere Cu- und/oder Fe-Zeolithe.

Erfindungsgemäß werden Oxidationskatalysatoren für den Abbau von CO und Kohlenwasserstoffen in Zementwerken und anderen vergleichbaren hochkalorischen Anwendungen entweder dauerhaft oder zeitweise oberhalb von 280 °C, z.B. im Bereich von 350 bis 550 °C, betrieben. Für den Fall des dauerhaften Betriebs oberhalb von 350 °C bietet sich beispielsweise die Kombination mit einem VWT- oder Eisenzeolith-Katalysator zur Entfernung von Stickoxiden an. Ein Eisenzeolith-Katalysator zeigt beispielsweise im Realgas eines Zementwerkes ("Low dust"-Seite) nach 2.500 Betriebsstunden eine Stickoxidminderung von > 70 % (Frischwert ∼ 90 %, GHSV = 12000 h⁻¹ bei 10 Vol.-% H₂O im Feed). Damit ist ein solcher Katalysator für eine kombinierte Entfernung von Stickoxiden, organischen Stoffen und Kohlenmonoxid im erfindungsgemäßen Verfahren geeignet. Ferner hat der Eisenzeolith-Katalysator den Vorteil gegenüber VWT-Katalysatoren, überschüssiges Ammoniak selektiv zu Stickstoff und Wasser zu oxidieren.

Der Oxidationskatalysator kann in Ausführungsformen des Verfahrens in Form eines Vollextrudats, z.B. in Form von Partikeln oder Wabenkörpern, in Form eines geträgerten Katalysators oder als Trägerkatalysator eingesetzt werden. Zum Beispiel kann der Oxidationskatalysator als Vollextrudat die Form eines Wabenkörpers besitzen.

Als geträgerter Katalysator, auch Coat- oder Beschichtungskatalysator genannt, liegt der Oxidationskatalysator als Feststoff-Katalysator vor, der durch Beschichten eines (typischerweise nicht porösen) Trägerkörpers, z.B. eines Wabenkörpers, mit einer porösen Schicht enthaltend die eigentlich katalytisch aktive Spezies hergestellt wird. Beispiele dafür sind Katalysatoren, bei denen auf einem inerten unporösen Träger aus Quarz (SiO₂), Cordierit, Magnesiumsilicat (Steatit), Siliciumcarbid, Zinnoxid, Porzellan oder Metallen, insbesondere Stahllegierungen etc., eine Schicht, die die katalytisch aktive Masse enthält, ein sogenannter Washcoat, aufgebracht ist. Bei den geträgerten Katalysatoren dient der Trägerkörper lediglich der Formgebung ("structural support"). Im Gegensatz zu Trägerkatalysatoren, bei denen die aktiven Elemente dispers in einem porösen Träger verteilt sind, ist beim geträgerten Katalysator der typischerweise nicht poröse Trägerkörper von einer die aktive Spezies enthaltenden Schicht umhüllt.

In weiteren Ausführungsformen des erfindungsgemäßen Verfahrens kann der Oxidationskatalysator ein mikroporöses Zeolithmaterial, welches Pt und/oder Pd und optional ein unedles Übergangsmetall enthält und einen porösen SiO₂-haltigen Binder umfassen, wobei der Oxidationskatalysator einen Anteil an Mikroporen von mehr als 70 %, bezogen auf das Gesamtporenvolumen des Oxidationskatalysators, aufweisen kann. Dabei kann das Zeolithmaterial einen Aluminiumanteil von weniger als 2 Mol-% besitzen. Bevorzugt enthält das Zeolithmaterial 0,5 bis 6,0 Gew.-% Edelmetall. Außerdem kann das Gewichtsverhältnis Zeolithmaterial/Binder 80:20 bis 60:40 betragen. Die BET-Oberfläche des Oxidationskatalysators beträgt beispielsweise 10 bis 800 m²/g und das integrale Porenvolumen des Oxidationskatalysators kann größer als 100 mm³/g sein.

Ein derartiger Oxidationskatalysator kann zum Beispiel hergestellt sein durch: Einbringen einer Edelmetall-Vorläuferverbindung, welche Pt und/oder Pd enthält, in ein mikroporöses Zeolithmaterial; Kalzinieren des mit der Edelmetall-Vorläuferverbindung beladenen Zeolithmaterials; Vermischen des mit der Edelmetall-Vorläuferverbindung beladenen Zeolithmaterials mit einem porösen SiO₂-haltigen Binder und einem Lösungsmittel; Trocknen und Kalzinieren des Gemisches umfassend das mit der Edelmetall-Vorläuferverbindung beladene Zeolithmaterial und den Binder. Ferner kann die nach dem Vermischen des mit der Edelmetall-Vorläuferverbindung beladenen Zeolithmaterials mit einem porösen SiO₂-haltigen Binder und einem Lösungsmittel erhaltene Mischung auf einen Tragkörper aufgebracht werden. Eine der Kalzinierungen oder beide Kalzinierungen können unter Ar durchgeführt worden sein.

Ferner handelt es sich bei dem Zeolithmaterial bevorzugt um ein Material, das ausgewählt ist aus der Gruppe bestehend aus AFI, AEL, BEA, CHA, EUO, FAU, FER, KFI, LTL, MAZ, MOR, MEL, MTW, OFF, TON und MFI. Außerdem kann sich das Pt- und/oder Pd und/oder das unedle Übergangsmetall im inneren Porensystem des Zeolithen befinden, z.B. in Form von Pt- und/oder Pd-Partikeln und/oder Übergangsmetalloxidpartikeln.

In dem erfindungsgemäßen Verfahren ist das Edelmetall Palladium und/oder Platin.

In Ausführungsformen des Verfahrens ist das unedle Übergangsmetall ausgewählt aus der Gruppe bestehend aus Co, Mn, Cu, Cr und Fe oder einer Kombination der genannten Übergangsmetalle und/oder liegt als Oxid vor und/oder ist reduzierbar.

Wenn der Oxidationskatalysator in Form eines Vollextrudats vorliegt, kann der Anteil an Pd und/oder Pt und/oder an unedlen Übergangsmetallen bevorzugt aus der Gruppe Cu, Mn, Co, Cr und Fe im Bereich von 0,01 bis 20 Gew.-%, bezogen auf das Gesamtgewicht des Oxidationskatalysators liegen. Wenn der Oxidationskatalysator in Form eines geträgerten Katalysators eingesetzt wird, kann der Anteil an Pd und/oder Pt und/oder an unedlen Übergangsmetallen bevorzugt aus der Gruppe Cu, Mn, Co, Cr und Fe bevorzugt im Bereich von 0,01 bis 20 Gew.-%, bezogen auf die Gesamtmasse der Schicht, liegen.

Die Erfindung wird nun anhand einiger Ausführungsbeispiele, welche jedoch nicht als beschränkend auf den Umfang der Erfindung zu verstehen sind, näher erläutert.

### Methoden

### Elementanalytik mit ICP:

Zur Ermittlung des Gehalts an Edelmetallen und anderen Elementen wurde eine ICP-AES (Inductively coupled plasma atomic emission spectroscopy) mit dem Gerät ICP Spectro Modula durchgeführt. Als Chemikalien wurden dabei eingesetzt: HF 40% pA., HCl 37% pA. Die Probe war fein gemahlen. 50 mg Probe wurden in einen 50 ml Plastiktube eingewogen und mit 2 ml Flusssäure und 2 ml Salzsäure versetzt. Im Heizblock wurde bei 85°C aufgeschlossen bis eine klare Lösung entstand. Nun wurde temperiert, aufgefüllt und geschüttelt. Alle Elemente wurden am ICP gemessen. Beispielsweise wurden Pt und Pd mit folgenden Einstellungen gemessen: Wellenlänge: 214, 423 nm, Standards: 10, 30, 50 ppm. Alle Standards waren angepasst mit SiO₂, HF und HCl. Die Auswertung folgte folgender Berechnung: w(E* in Prozent) = β(E*-Messwert in mg/l) x V(Messkolben in l) x 100 / m(Einwaage in mg) (E*= jeweiliges Element).

### Thermoanalytische Plots

Zur Erfassung der Thermodesorption (Masse 44) von/aus den Oxidationskatalysatoren wurde ein Thermoanalysator NETZSCH STA 409 PC/PG gekoppelt mit einem Quadrupol-Massenspektrometer Balzers MID eingesetzt. Im Analysator wurde die Probe mit 10 K/min unter Luft bis 500 °C aufgeheizt und anschließend diese Temperatur für eine Stunde gehalten. Von den von der Probe abgegebenen Gasen wurde ein Teilstrom in das angeschlossene Massenspektrometer geleitet. Aus den erhaltenen Massenspektren über die Versuchszeit wurde die Massezahl (m/z) 44 extrahiert, die hier dem Fragment CO₂⁺ entspricht. Eine Zuordnung des m/z = 44-Signals zu N₂O kann ausgeschlossen werden, da keine N-haltigen Spezies zugegen waren und die Oxidation des Luftstickstoffs bei diesen Temperaturen ausgeschlossen werden kann.

### Ausführungsbeispiele

Es wurden drei Beispiele des erfindungsgemäßen Verfahrens durchgeführt. Die eingesetzten Oxidationskatalysatoren der Beispiele 1 bis 3 sind aus Tabelle 1 ersichtlich. Dabei handelt es sich jeweils um einen Katalysator, der auf einem Träger aus Corderit mit einer Zelldichte von 100 cpsi einen Washcoat aufweist, der das jeweilige Edelmetall enthält. Die Bedingungen während der Testläufe des Verfahrens sind Tabelle 2 zu entnehmen. Bei den Oxidationskatalysatoren der Beispiele 1 bis 3 handelt es sich jeweils um Rückläufer aus Zementwerken, in denen sie bei 250 bis 280°C mit Realabgas ("low dust"-Seite) beaufschlagt worden waren. Als zu reinigendes Abgas wurde ein Gemisch aus Kohlenwasserstoffen, darunter Ethylen, und CO verwendet.

**Tabelle 1**

| | Washcoat | Pt [g/l] | Pd [g/l] |
|---|---|---|---|
| Beispiel 1 (Vergleich) | Ce-, La- und Y-dotiertes Al₂O₃ | 0,33 | 1,32 |
| Beispiel 2 (Vergleich) | TiO₂-WO₃-SiO₂ | 1,2 | 0,24 |
| Beispiel 3 (erfindungsgemäß) | Pt-BEA150 als edelmetallhaltiger Zeolith | 0,55 | - |

**Tabelle 2**

| Reaktantenmischung | Sauerstoffkonzentration [Vol.-%]¹ | Wasserkonzentration [Vol.-%]¹ | GHSV (Gas hourly space velocity) [h⁻¹] | Temperaturrampe [°C] |
|---|---|---|---|---|
| 1000 ppmv CH₄, 200 ppmv C₂H₆, 200 ppmv C₂H₄, 200 ppmv C₃H₈ und 800 ppmv CO | 10 | 3,0 | 40000 | 120-550-120 |

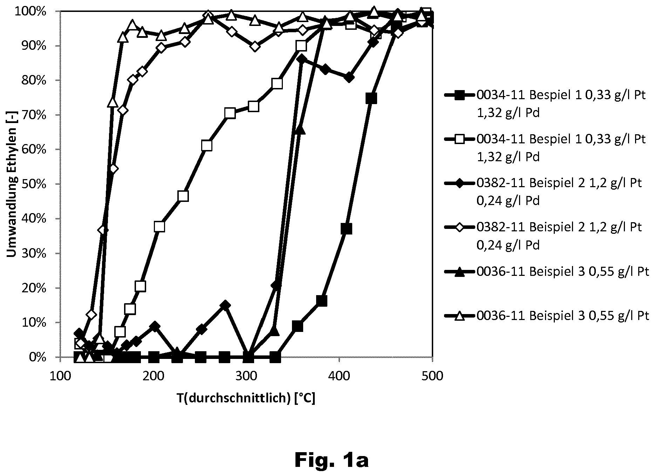

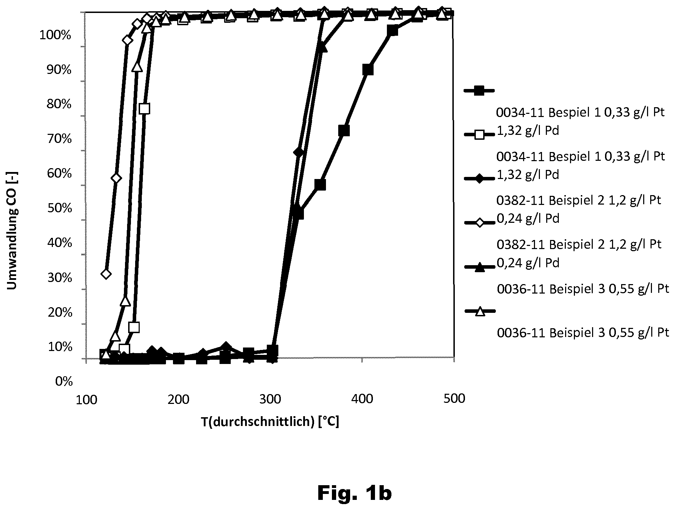

Die Figuren 1a und 1b zeigen den Umsatz von Ethylen und den Umsatz von CO jeweils in Abhängigkeit von der Temperatur der Beispiele 1 (erfindungsgemäßes Verfahren) und der Beispiele 2 und 3 (Vergleichsbeispiele). Die voll dargestellten Symbole der einzelnen Messpunkte entsprechen den Testläufen während einer ansteigenden Temperaturrampe. Die offen dargestellten Symbole der einzelnen Messpunkte entsprechen den Testläufen während einer fallenden Temperaturrampe.

Für alle drei in Figur 1 dargestellten Oxidationskatalysatoren ist zunächst im steigenden Teil bis 300 °C keinerlei Aktivität zu erkennen. Der Ausgangszustand der 3 Beispiele in Figur 1 ist der nach der Deaktivierung im Zementwerk. Überraschenderweise ist in den Verfahren der Beispiele oberhalb von 300 °C jedoch eine deutliche Aktivierung der Katalysatoren zu beobachten, die während der katalytischen Tests bis etwa 400 bis 450 °C abgeschlossen ist. Im fallenden Teil des Testprogramms besitzen alle drei Katalysatoren eine sehr hohe Aktivität, die dem Ausgangsniveau der frischen Katalysatoren weitgehend entspricht.

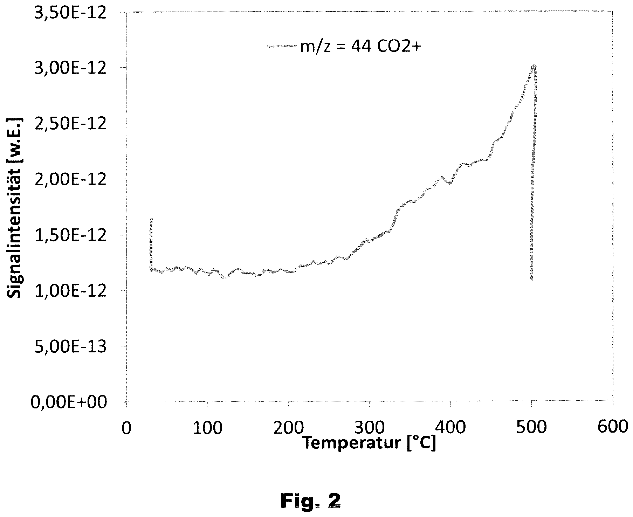

Figur 2 zeigt einen thermoanalytischen Plot (temperaturprogrammiertes Aufheizen der Probe im Gasstrom mit Analyse des Abgases) des Beispiels 2 mit der Massespur 44 für CO₂. Deutlich ist zu erkennen, dass oberhalb von 250 bis 300 °C CO₂ von der Probe emittiert wird, woraus auf die Oxidation rußartiger Ablagerungen auf der Katalysatoroberfläche geschlossen werden kann.

Nach der Deaktivierung im Zementwerk wurden die Katalysatoren des Beispiels 2 mehrfach im Muffelofen für 3 Stunden bei 550 °C unter Luft behandelt und anschließend wieder in der Anlage im Zementwerk eingebaut. Sie erreichten nach der Regeneration im Muffelofen wieder ihre ursprüngliche Performance im Zementwerk und zeigten eine Deaktivierung im Bereich von 2 bis 6 Stunden, also dem jeweiligen frischen Katalysator entsprechend. Gleiches wurde beobachtet, wenn der deaktivierte Katalysator des Beispiels 2 an der Stelle seiner Verwendung, d.h. in der Anlage zur Reinigung des Abgases im Zementwerk, auf gleiche Weise regeneriert wurde.

Es wurde auch eine Regeneration während des Betriebs des Katalysators gemäß Beispiel 2 unter Realabgas im Zementwerk durchgeführt. Dabei wurde der Katalysator bei einer GHSV von 12.000 1/h und einer Temperatur von 550°C betrieben. Als Wirkungsgrad des Katalysators wurde über einen Zeitraum von 5 Stunden ein konstanter CO-Abscheidegrad von ca. 95 % festgestellt. Wurde der Katalysator des Beispiels 2 unter den gleichen Bedingungen, jedoch bei einer Temperatur von 250°C (anstelle von 550°C) betrieben, war nach 5 Stunden schon eine sehr deutliche Reduktion des CO-Abscheidegrads festzustellen.

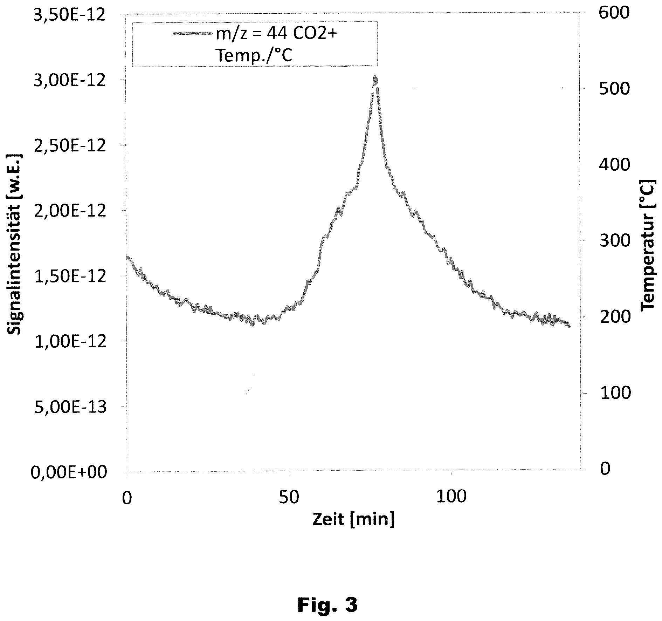

Figur 3 zeigt zusätzlich einen thermoanalytischen Plot für den Oxidationskatalysator von Beispiel 2, wobei Masse 44 im Massenspektrometer in Abhängigkeit von der Zeit unter gleichzeitiger Messung der Temperatur aufgenommen wurde. Hieraus ist ersichtlich, dass eine Erwärmung des Katalysators gemäß Beispiel 2 auf eine Temperatur über 280 °C, z.B. im Bereich von mehr als 300 °C oder mehr als 350 °C, für eine Zeitdauer von mehr als eine Stunde zur Desorption von CO₂ führt. Das Erwärmen des Oxidationskatalysators gemäß Beispiel 2 bis zu 500 °C und über 2 Stunden führt zu einer vollständigen Verbrennung des enthaltenen Rußes, da nach 2 Stunden kein CO₂ mehr entsteht. Ein zeitweiser Betrieb des Katalysators gemäß Beispiel 2 bei Temperaturen über 280°C, z.B. im Bereich von 350 bis 400 °C, insbesondere länger als 1 Stunde, ermöglicht somit eine Regenerierung des Oxidationskatalysators.

Die Figuren 1a und 1b zeigen den Umsatz von Ethylen und den Umsatz von CO jeweils in Abhängigkeit von der Temperatur der Beispiele 1 bis 3 des erfindungsgemäßen Verfahrens. Die voll dargestellten Symbole der einzelnen Messpunkte entsprechen den Testläufen während einer ansteigenden Temperaturrampe. Die offen dargestellten Symbole der einzelnen Messpunkte entsprechen den Testläufen während einer fallenden Temperaturrampe.

Für alle drei in Figur 1 dargestellten Oxidationskatalysatoren ist zunächst im steigenden Teil bis 300 °C keinerlei Aktivität zu erkennen. Der Ausgangszustand der 3 Beispiele in Figur 1 ist der nach der Deaktivierung im Zementwerk. Überraschenderweise ist in den Verfahren der Beispiele oberhalb von 300 °C jedoch eine deutliche Aktivierung der Katalysatoren zu beobachten, die während der katalytischen Tests bis etwa 400 bis 450 °C abgeschlossen ist. Im fallenden Teil des Testprogramms besitzen alle drei Katalysatoren eine sehr hohe Aktivität, die dem Ausgangsniveau der frischen Katalysatoren weitgehend entspricht.

Figur 2 zeigt einen thermoanalytischen Plot (temperaturprogrammiertes Aufheizen der Probe im Gasstrom mit Analyse des Abgases) des Beispiels 2 mit der Massespur 44 für CO₂. Deutlich ist zu erkennen, dass oberhalb von 250 bis 300 °C CO₂ von der Probe emittiert wird, woraus auf die Oxidation rußartiger Ablagerungen auf der Katalysatoroberfläche geschlossen werden kann.

Nach der Deaktivierung im Zementwerk wurden die Katalysatoren des Beispiels 2 mehrfach im Muffelofen für 3 Stunden bei 550 °C unter Luft behandelt und anschließend wieder in der Anlage im Zementwerk eingebaut. Sie erreichten nach der Regeneration im Muffelofen wieder ihre ursprüngliche Performance im Zementwerk und zeigten eine Deaktivierung im Bereich von 2 bis 6 Stunden, also dem jeweiligen frischen Katalysator entsprechend. Gleiches wurde beobachtet, wenn der deaktivierte Katalysator des Beispiels 2 an der Stelle seiner Verwendung, d.h. in der Anlage zur Reinigung des Abgases im Zementwerk, auf gleiche Weise regeneriert wurde.

Es wurde auch eine Regeneration während des Betriebs des Katalysators gemäß Beispiel 2 unter Realabgas im Zementwerk durchgeführt. Dabei wurde der Katalysator bei einer GHSV von 12.000 1/h und einer Temperatur von 550°C betrieben. Als Wirkungsgrad des Katalysators wurde über einen Zeitraum von 5 Stunden ein konstanter CO-Abscheidegrad von ca. 95 % festgestellt. Wurde der Katalysator des Beispiels 2 unter den gleichen Bedingungen, jedoch bei einer Temperatur von 250°C (anstelle von 550°C) betrieben, war nach 5 Stunden schon eine sehr deutliche Reduktion des CO-Abscheidegrads festzustellen.

Figur 3 zeigt zusätzlich einen thermoanalytischen Plot für den Oxidationskatalysator von Beispiel 2, wobei Masse 44 im Massenspektrometer in Abhängigkeit von der Zeit unter gleichzeitiger Messung der Temperatur aufgenommen wurde. Hieraus ist ersichtlich, dass eine Erwärmung des Katalysators gemäß Beispiel 2 auf eine Temperatur über 280 °C, z.B. im Bereich von mehr als 300 °C oder mehr als 350 °C, für eine Zeitdauer von mehr als eine Stunde zur Desorption von CO₂ führt. Das Erwärmen des Oxidationskatalysators gemäß Beispiel 2 bis zu 500 °C und über 2 Stunden führt zu einer vollständigen Verbrennung des enthaltenen Rußes, da nach 2 Stunden kein CO₂ mehr entsteht. Ein zeitweiser Betrieb oder eine periodische Erwärmung des Katalysators gemäß Beispiel 2 bei Temperaturen über 280°C, z.B. im Bereich von 350 bis 400 °C, insbesondere länger als 1 Stunde, ermöglicht somit eine Regenerierung des Oxidationskatalysators.

## Patentansprüche

1. Verfahren zur Reinigung von Abgas, das durch die Verbrennung von Holz, Biomasse, Erdöl, Altöl, Altreifen, Altlösungsmittel, industriellen oder kommunalen Abfallstoffen, Müll und/oder Sondermüll, und/oder bei der Herstellung von Zement oder in einer Sintermetallanlage entsteht und zur Regenerierung eines hierfür eingesetzten Oxidationskatalysators, umfassend
Behandeln des Abgases in dem Oxidationskatalysator, der ein katalytisch aktives Material umfasst, das ein mikroporöses Zeolithmaterial enthält, welches Pt und/oder Pd und optional ein unedles Übergangsmetall enthält, wobei der Oxidationskatalysator kontinuierlich oder zeitweise bei einer Temperatur, die die Oxidation von Ruß- und/oder Kohlenstoff-Partikeln bewirkt, betrieben wird, und wobei der Oxidationskatalysator für den Abbau von CO und Kohlenwasserstoffen eingesetzt wird.

2. Verfahren nach Anspruch 1, wobei die Temperatur, die die Oxidation von Ruß- und/oder Kohlenstoff-Partikeln bewirkt, in einem Bereich über 280°C liegt.

3. Verfahren nach einem der vorstehenden Ansprüche,
wobei der zeitweise Betrieb des Oxidationskatalysators bei/auf der/die Temperatur, die die Oxidation von Ruß- und/oder Kohlenstoff-Partikeln bewirkt, in Zeitabständen von 0,5 bis 10 Stunden durchgeführt wird; und/oder wobei beim zeitweisen die Temperatur, die die Oxidation von Ruß- und/oder Kohlenstoff-Partikeln bewirkt, für eine Zeitdauer im Bereich von 0,1 bis 3 Stunden eingestellt wird.

4. Verfahren nach einem der vorstehenden Ansprüche,
wobei beim kontinuierlichen oder zeitweisen Betrieb des Oxidationskatalysators die Temperatur, die die Oxidation von Ruß- und/oder Kohlenstoff-Partikeln bewirkt, mittels des Abgases und/oder mittels einer Heizeinrichtung und/oder eines Wärmetauschers eingestellt wird.

5. Verfahren nach einem der vorstehenden Ansprüche,
wobei der kontinuierliche oder zeitweise Betrieb des Oxidationskatalysators unter Anwesenheit von Sauerstoff und/oder Luft durchgeführt wird.

6. Verfahren nach einem der vorstehenden Ansprüche,
wobei das unedle Übergangsmetall ausgewählt ist aus der Gruppe bestehend aus Co, Mn, Cu, Cr und Fe oder einer Kombination der genannten Übergangsmetalle und/oder als Oxid vorliegt und/oder reduzierbar ist.

7. Verfahren nach einem der vorstehenden Ansprüche,
wobei das katalytisch aktive Material als Vollextrudat oder als Washcoat auf einem Trägerkörper eingesetzt wird.

8. Verfahren nach einem der vorstehenden Ansprüche,
wobei das katalytisch aktive Material einen porösen SiO₂-haltigen Binder aufweist.

9. Verfahren nach einem der vorstehenden Ansprüche, wobei der Oxidationskatalysator in Kombination mit einem oder mehreren Katalysatoren betrieben wird, ausgewählt aus einem Katalysator für die Entfernung von Stickoxiden, einem Katalysator für die selektive katalytische Reduktion, einem Katalysator umfassend Vanadium, Wolfram und/oder Titan, und einem Katalysator umfassend einen Cu und/oder Fe enthaltenden Zeolithen.

10. Verfahren nach Anspruch 9, umfassend
- Behandeln des Abgases in dem Oxidationskatalysator;
- Einleiten von Reduktionsmittel in das Abgas; und
- Behandeln des Abgases in dem Katalysator für die selektive katalytische Reduktion;
wobei das Einleiten des Reduktionsmittels vor dem Behandeln des Abgases in dem Katalysator für die selektive katalytische Reduktion durchgeführt wird.

11. Verfahren nach Anspruch 10,
wobei das Behandeln des Abgases in dem Oxidationskatalysator vor dem Einleiten des Reduktionsmittels in das Abgas oder nach dem Behandeln des Abgases in dem Katalysator für die selektive katalytische Reduktion durchgeführt wird..

12. Verfahren nach Anspruch 10 oder 11,
wobei das Abgas bei einer Temperatur oberhalb 300 °C, bevorzugt oberhalb 350°C, und/oder unterhalb 600°C, bevorzugt unterhalb 550 °C, gereinigt wird; und/oder wobei als das Reduktionsmittel Ammoniak und/oder Harnstoff eingesetzt wird.

## Claims

1. Method for cleaning offgas arising from the combustion of wood, biomass, mineral oil, natural gas, used oil, used tires, used solvents, industrial or communal refuse, waste and/or controlled waste, and/or in the manufacture of cement or in a sintered metal plant and for regenerating an oxidation catalyst used therefor, comprising
treating the offgas in the oxidation catalyst comprising a catalytically active material comprising a microporous zeolite material containing Pt and/or Pd and optionally a base transition metal,
wherein the oxidation catalyst is operated continuously or intermittently at a temperature which brings about the oxidation of soot and/or carbon particles, and wherein the oxidation catalyst is used for the degradation of CO and hydrocarbons.

2. Method according to Claim 1,
wherein the temperature which brings about the oxidation of soot and/or carbon particles is within a region above 280°C

3. Method according to either of the preceding claims,
wherein the intermittent operation of the oxidation catalyst at/to the temperature which brings about the oxidation of soot and/or carbon particles is conducted at time intervals of 0.5 to 10 hours; and/or
wherein the temperature which brings about the oxidation of soot and/or carbon particles in the intermittent is set for a period in the range from 0.1 to 3 hours.

4. Method according to any of the preceding claims,
wherein the temperature which brings about the oxidation of soot and/or carbon particles in the continuous or intermittent operation of the oxidation catalyst is set by means of the offgas and/or by means of a heating unit and/or a heat exchanger.

5. Method according to any of the preceding claims,
wherein the continuous or intermittent operation of the oxidation catalyst is conducted in the presence of oxygen and/or air.

6. Method according to any of the preceding claims,
wherein the base transition metal is selected from the group consisting of Co, Mn, Cu, Cr and Fe or a combination of the transition metals mentioned and/or is present as an oxide and/or is reducible.

7. Method according to any of the preceding claims,
wherein the catalytically active material is used in the form of a solid extrudate or in the form of a washcoat on a support body.

8. Method according to any of the preceding claims,
wherein the catalytically active material includes a porous SiO₂ binder.

9. Method according to any of the preceding claims,
wherein the oxidation catalyst is operated in combination with one or more catalytic converters selected from a catalytic converter for the removal of nitrogen oxides, a catalytic converter for selective catalytic reduction, a catalytic converter comprising vanadium, tungsten and/or titanium, and a catalytic converter comprising a Cu- and/or Fe-containing zeolite.

10. Method according to Claim 9, comprising
- treating the offgas in the oxidation catalyst;
- introducing reducing agent into the offgas; and
- treating the offgas in the catalytic converter for selective catalytic reduction;
wherein the introduction of the reducing agent is conducted prior to the treatment of the offgas in the catalytic converter for selective catalytic reduction.

11. Method according to Claim 10,
wherein the treatment of the offgas in the oxidation catalyst is conducted prior to the introduction of the reducing agent into the offgas or after the treatment of the offgas in the catalytic converter for selective catalytic reduction.

12. Method according to Claim 10 or 11,
wherein the offgas is cleaned at a temperature above 300°C, preferably above 350°C, and/or below 600°C, preferably below 550°C; and/or
wherein the reducing agent used is ammonia and/or urea.

## Revendications

1. Procédé de purification d'un gaz d'échappement, qui est formé par la combustion de bois, d'une biomasse, de pétrole, d'huile usée, de pneus usés, de solvants usés, de déchets industriels ou communaux, d'ordures et/ou de déchets spéciaux, et/ou lors de la fabrication de ciment ou dans une unité de production de métal fritté, et de régénération d'un catalyseur d'oxydation utilisé pour cela, comprenant :
le traitement du gaz d'échappement dans le catalyseur d'oxydation, qui comprend un matériau catalytiquement actif qui contient un matériau zéolitique microporeux, qui contient du Pt et/ou du Pd et éventuellement un métal de transition commun, le catalyseur d'oxydation étant exploité en continu ou de manière intermittente à une température qui provoque l'oxydation de particules de noir de carbone et/ou de carbone, et le catalyseur d'oxydation étant utilisé pour la décomposition de CO et d'hydrocarbures.

2. Procédé selon la revendication 1, dans lequel la température qui provoque l'oxydation de particules de noir de carbone et/ou de carbone se situe dans une plage supérieure à 280 °C.

3. Procédé selon l'une quelconque des revendications précédentes, dans lequel l'exploitation intermittente du catalyseur d'oxydation à la température qui provoque l'oxydation de particules de noir de carbone et/ou de carbone est réalisée à des intervalles temporels de 0,5 à 10 heures ; et/ou, lors de intermittente, la température qui provoque l'oxydation de particules de noir de carbone et/ou de carbone est ajustée pendant une durée dans la plage allant de 0,1 à 3 heures.

4. Procédé selon l'une quelconque des revendications précédentes, dans lequel, lors de l'exploitation continue ou intermittente du catalyseur d'oxydation, la température qui provoque l'oxydation de particules de noir de carbone et/ou de carbone est ajustée au moyen du gaz d'échappement et/ou au moyen d'un dispositif de chauffage et/ou d'un échangeur de chaleur.

5. Procédé selon l'une quelconque des revendications précédentes, dans lequel l'exploitation continue ou intermittente du catalyseur d'oxydation est réalisée en présence d'oxygène et/ou d'air.

6. Procédé selon l'une quelconque des revendications précédentes, dans lequel le métal de transition commun est choisi dans le groupe constitué par Co, Mn, Cu, Cr et Fe, ou une combinaison des métaux de transition mentionnés et/ou se présente sous la forme d'un oxyde et/ou est réductible.

7. Procédé selon l'une quelconque des revendications précédentes, dans lequel le matériau catalytiquement actif est utilisé sous la forme d'un extrudat massif ou sous la forme d'une couche d'imprégnation sur un corps support.

8. Procédé selon l'une quelconque des revendications précédentes, dans lequel le matériau catalytiquement actif comprend un liant poreux contenant du SiO₂.

9. Procédé selon l'une quelconque des revendications précédentes, dans lequel le catalyseur d'oxydation est exploité en combinaison avec un ou plusieurs catalyseurs, choisis parmi un catalyseur pour l'élimination d'oxydes d'azote, un catalyseur pour la réduction catalytique sélective, un catalyseur comprenant du vanadium, du tungstène et/ou du titane, et un catalyseur comprenant une zéolithe contenant du Cu et/ou du Fe.

10. Procédé selon la revendication 9, comprenant :
- le traitement du gaz d'échappement dans le catalyseur d'oxydation ;
- l'introduction d'un réducteur dans le gaz d'échappement ; et
- le traitement du gaz d'échappement dans le catalyseur pour la réduction catalytique sélective ;
l'introduction du réducteur étant réalisée avant le traitement du gaz d'échappement dans le catalyseur pour la réduction catalytique sélective.

11. Procédé selon la revendication 10, dans lequel le traitement du gaz d'échappement dans le catalyseur d'oxydation est réalisé avant l'introduction du réducteur dans le gaz d'échappement ou après le traitement du gaz d'échappement dans le catalyseur pour la réduction catalytique sélective.

12. Procédé selon la revendication 10 ou 11, dans lequel le gaz d'échappement est purifié à une température supérieure à 300 °C, de préférence supérieure à 350 °C, et/ou inférieure à 600 °C, de préférence inférieure à 550 °C ; et/ou de l'ammoniac et/ou de l'urée sont utilisés en tant que réducteur.
